# EUROPEAN PATENT SPECIFICATION

(11) **EP 0 456 405 B1**
(45) Date of publication and mention of the grant of the patent: **19.02.1997**
(21) Application number: 91303947.5
(22) Date of filing: 01.05.1991
(51) Int. Cl.: G11B 27/30, G11B 15/467

(54) **Digital signal recording apparatus**
Datensignalaufzeichnungsgerät
Appareil d'enregistrement de signaux numériques

(30) Priority: 07.05.1990 JP 117153/90
(43) Date of publication of application: 13.11.1991
(73) Proprietor: SONY CORPORATION, Tokyo 141 (JP)
(72) Inventor: Kanota, Keiji, c/o Patent Division, Shinagawa-ku, Tokyo 141 (JP); Seki, Takahito, c/o Patent Division, Shinagawa-ku, Tokyo 141 (JP)
(74) Representative: Cotter, Ivan John

(56) References cited:
- EP-A- 0 117 753
- WO-A-89/02190
- DE-A- 3 203 541
- PATENT ABSTRACTS OF JAPAN vol. 13, no. 502 (P-958)(3850) 13 November 1989 & JP-A-1 201 801
- PATENT ABSTRACTS OF JAPAN vol. 4, no. 103 (P-20)(585) 23 July 1980 & JP-A-55 062 509
- PATENT ABSTRACTS OF JAPAN vol. 12, no. 313 (P-749)(3160) 25 August 1988 & JP-A-63 081 603

## Description

This invention relates to digital signal recording apparatus and particularly, but not exclusively, to a digital video tape recorder.

In an 8-mm video tape recorder (VTR), it is usual for a servo pilot signal for use in automatic tracking in a recording/playback mode to be combined with a recording information signal on the time base thereof to produce a composite signal, which is then recorded on a magnetic tape.

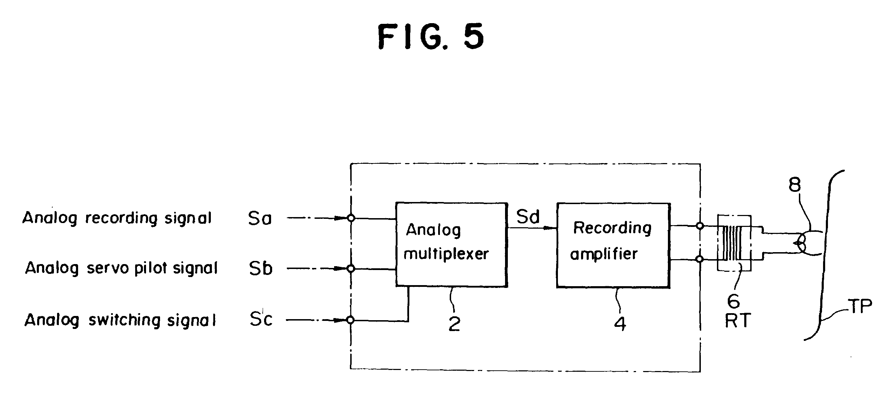

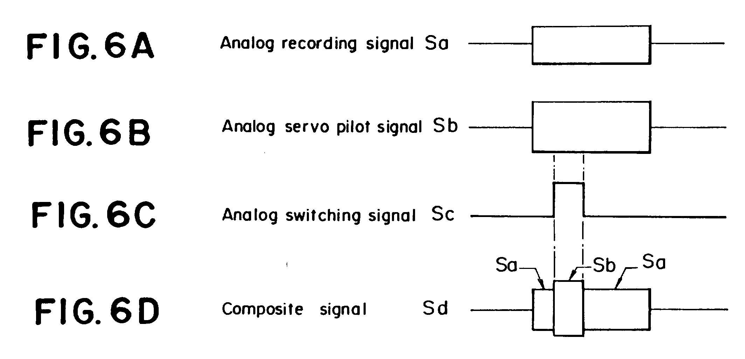

A previously proposed digital signal processing apparatus for performing such a recording operation is shown in Figure 5, and waveforms of signals processed in the apparatus are shown in Figure 6.

This apparatus includes an analogue multiplexer 2 and a recording amplifier 4, wherein an analogue recording signal Sa and an analogue servo pilot signal Sb shown in Figures 6A and 6B respectively are controlled to predetermined levels by amplifiers (not shown), and are then supplied to the analogue multiplexer 2. Thereafter the analogue recording signal Sa and the analogue servo pilot signal Sb are combined with each other on a predetermined time base by an analogue switching signal Sc shown in Figure 6C. The composite signal Sd thus produced is current-amplified by the recording amplifier 4, and is supplied via a rotary transformer (RT) 6 to a magnetic head 8, whereby the signal Sd is recorded on a magnetic tape Tp.

In this manner the analogue pilot signal Sb of higher level than the recording signal Sa is recorded on the magnetic tape Tp, so that an increased carrier-to-noise ratio is attained when the analogue pilot signal Sb is read out later.

In the signal processing apparatus described above, the analogue recording signal Sa supplied to the analogue multiplexer 2 is in a frequency band of, for example, 20 to 30 MHz, while the analogue servo pilot signal Sb is in a frequency band of several MHz. For amplifying such wide-band signals to desired flat levels, a high-frequency amplifier of a relatively complicated circuit configuration needs to be provided, and therefore it is impossible to meet the recent requirements with regard to size reduction of both the apparatus as a whole and of the signal processing unit. Furthermore, there exists another disadvantage that characteristic variations are prone to occur due to temperature fluctuations.

Japanese Patent Application Publication No. JP-A-1 201 801, an English language abstract of which appears at PATENT ABSTRACTS OF JAPAN, vol. 13, no. 502 (P-958) [3850], discloses a digital signal recording apparatus according to the pre-characterising part of claim 1 hereof.

International (PCT) Patent Application Publication No. WO 89/02190 discloses an automatic gain control system for controlling the gain of an amplifier.

According to the present invention there is provided a digital signal recording apparatus comprising:
variable gain amplifier means for selectively amplifying a time multiplexed composite signal comprising a digital information signal portion and a pilot signal portion such that, in an output signal of the variable gain amplifier means, the pilot signal portion has a higher level that the digital information signal portion; and
a recording head for recording the output signal of the variable gain amplifier means on a recording medium;
characterised in that:
a digital multiplexer is responsive to a switching signal to time multiplex together a digital information signal and a pilot signal, which is a digital pilot signal, to form the time multiplexed composite signal;
the variable gain amplifier means is responsive to said switching signal to carry out said selective amplification of the time multiplexed composite signal produced by the digital multiplexer; and
the variable gain amplifier means comprises:
   an input circuit operative to phase invert the time multiplexed composite signal and to provide at a pair of output terminals an output signal suitable for amplification by a differential amplifier circuit;
   first and second transistors connected together to form said differential amplifier circuit, each of said transistors having a base connected to a respective one of said pair of output terminals of said input circuit and a collector connected to a supply voltage by means of a respective resistor, and emitters of said transistors being connected together;
   a pair of output terminals at which said output signal of the variable gain amplifier means is produced, each of said output terminals being connected to the collector of a respective one of the transistors; and
   a control circuit connected to the common connected emitters of said transistors and responsive to said switching signal to control the sum of the currents flowing through the emitters of said first and second transistors such that it is higher when said switching signal is of a level indicating that the time multiplexed composite signal currently comprises the digital pilot signal portion than when said switching signal is of a level indicating that the time multiplexed composite signal currently comprises the digital information signal portion.

The invention will now be described by way of example with reference to the accompanying drawings, throughout which like parts are referred to by like references, and in which:
Figure 1 is a block diagram of an embodiment of digital signal processing apparatus according to the present invention;
Figures 2A to 2E illustrate waveforms of processed signals for explaining the operation of the embodiment of Figure 1;
Figures 3 and 4 are circuit diagrams of respective examples of a recording amplifier employed in the embodiment;
Figure 5 shows a previously proposed signal processing apparatus; and
Figure 6 illustrates waveforms of processed signals for explaining the operation of the apparatus of Figure 5.

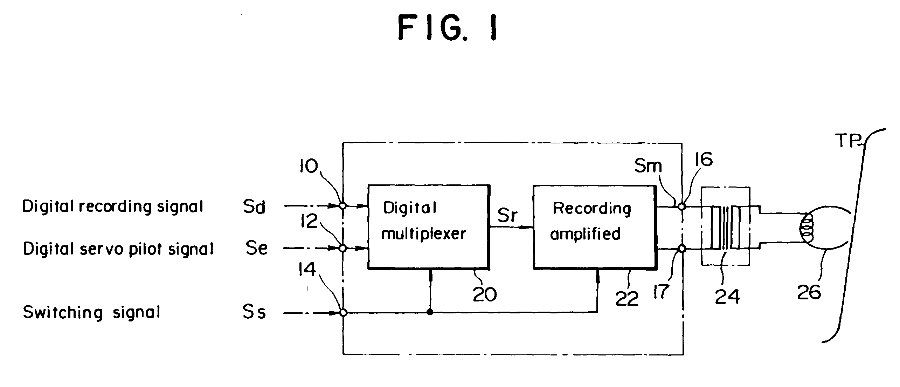

Referring to Figure 1, the apparatus comprises a first input terminal 10 supplied with a digital recording signal Sd. The signal Sd is produced by quantizing and digitizing an analogue composite signal which is in a frequency band of 20 to 30 MHz, and is obtained from a video signal processor where an image signal obtained by picking up a subject by a video camera of high image quality is processed. A second input terminal 12 is supplied with a digital servo pilot signal Se produced by quantizing and digitizing an analogue servo pilot signal which is in a frequency band of several MHz, and is generated from a video signal processing circuit or the like connected to the second input terminal 12.

A third input terminal 14 is supplied with a switching signal Ss which is produced by a timing generator or the like in a video signal processing circuit connected to the third input terminal 14 and is used for superimposing the digital servo pilot signal Se on a predetermined time base of the digital recording signal Sd.

The switching signal Ss, the digital recording signal Sd, and the digital servo pilot signal Se are supplied to a digital multiplexer 20, where the digital recording signal Sd and the digital servo pilot signal Se are combined with each other on a predetermined time base by a switching action based on the switching signal Ss, thereby to produce a composite recording signal Sr.

The composite recording signal Sr thus obtained is supplied to a recording amplifier 22, where the digital recording signal Sd and the digital servo pilot signal Se included in the composite recording signal Sr are current-amplified in accordance with the switching signal Ss. As a result, an amplified recording signal Sm, in which the digital servo pilot signal Se is higher in level than the digital recording signal Sd, is obtained between output terminals 16 and 17.

Thereafter the amplified recording signal Sm is supplied to a rotary transformer 24 connected to the output terminals 16 and 17, and thence to a magnetic head 26 so as to be magnetically recorded on a magnetic tape Tp.

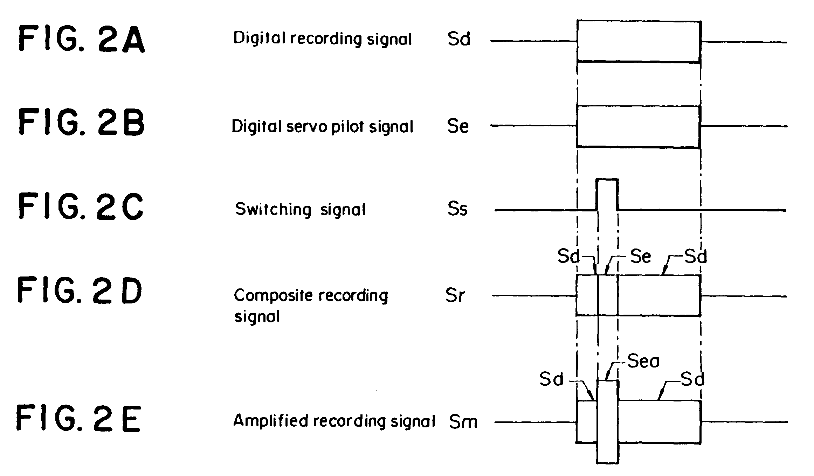

The operation will now be described in detail. The digital multiplexer 20 receives the digital recording signal Sd, the digital servo pilot signal Se, and the digital switching signal Ss shown in Figures 2A, 2B and 2C, respectively. In the digital multiplexer 20, the digital recording signal Sd and the digital, servo pilot signal Se are combined with eacth other on a time base corresponding to the switching signal Ss, so that a composite recording signal Sr of Figure 2D is supplied from the multiplexer 20.

The composite recording signal Sr is supplied to the recording amplifier 22 together with the switching signal Ss. In the recording amplifier 22, the digital recording signal Sd and the digital servo pilot signal Se forming the composite recording signal Sr are discriminated and current-amplified to become an amplified recording signal Sm shown in Figure 2E. The amplified recording signal Sm thus obtained is such that the digital servo pilot signal Se and the digital recording signal Sd are synchronized with the switching signal Ss and are discriminated on the time base, whereby the digital servo pilot signal Se is so amplified as to have a current greater than that of the digital recording signal Sd. Thereafter the amplified recording signal Sm is fed via the rotary transformer 24 and is then magnetically recorded on the magnetic tape Tp by means of the magnetic head 26.

In this case, the digital recording signal Sd and the digital servo pilot signal Se can be discriminatively amplified to have adequate currents individually, so that it becomes possible to eliminate the necessity of a high-frequency amplifier which is usually employed to amplify a relatively complicated wide-band signal to a desired flat level, hence simplifying the circuit configuration and facilitating the control action.

First and second examples of the recording amplifier 22 in the apparatus of Figure 1 will now be described.

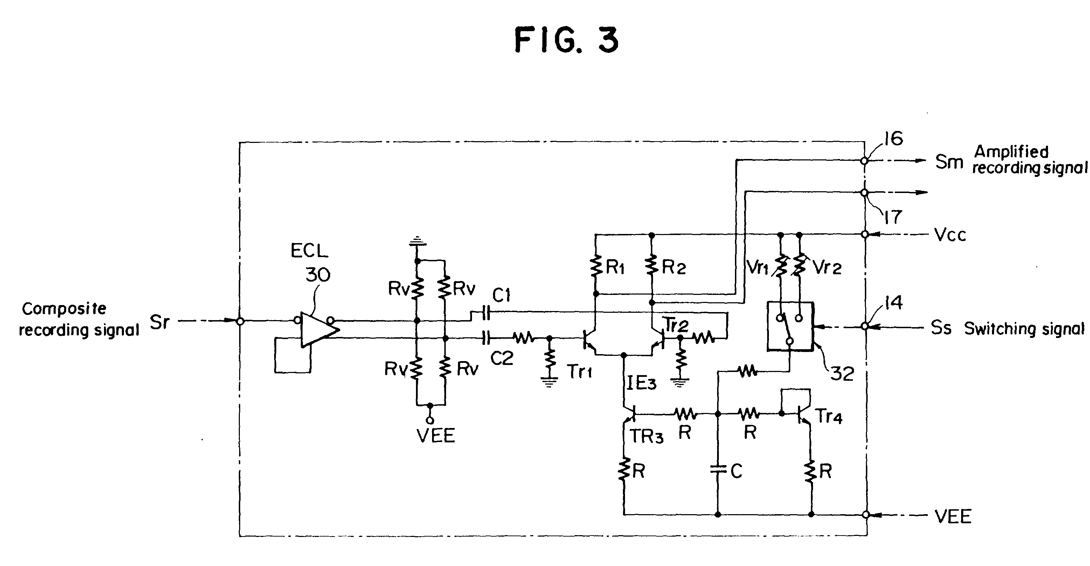

The first example of the recording amplifier 22 shown in Figure 3 comprises an emitter-coupled logic (ECL) circuit 30 supplied with the composite recording signal Sr of Figure 2D, a bridge circuit for matching a group of resistors Rv, and a differential amplifier composed of transistors TR1 and TR2 connected to an output terminal of the ECL circuit 30 via coupling capacitors C1 and C2.

Load resistors R1 and R2 are connected between a terminal Vcc and the collectors of the differential amplifier, and the amplified recording signal Sm obtained from the collector by differential amplification is supplied to the rotary transformer 24. There are also provided transistors TR3 and TR4 connected to form a known current mirror circuit for equalizing the emitter current IE₃ during the operation of the differential amplifier. Furthermore, a group of resistors R for setting a desired emitter current IE₃, and a capacitor C for blocking positive feedback are connected to the current control transistor TR3 and the transistor TR4 for stabilizing the base driving current. Also provided is a semiconductor switch 32 selectively changed in accordance with the switching signal Ss which is dependent on the levels of the digital recording signal Sd and the digital servo pilot signal Se. Variable resistors Vr1 and Vr2 are connected between the terminal Vcc and the stationary contact of the semiconductor switch 32.

In the recording amplifier 22, the composite recording signal Sr supplied to the ECL circuit 30 is phase-inverted to produce a signal of a predetermined form, which is then supplied via coupling capacitors C1, C2 to the transistors TR1 and TR2 forming the differential amplifier. The emitter currents IE₃ during the amplification by the transistors TR1 and TR2 are mutually equalized by the operations of the transistors TR3 and TR4 which are so connected as to form a current mirror circuit. When the switching signal Ss shown in Figure 2C is as its high level, the transistor TR2 is turned on while the transistor TR1 is turned off. In this case, a current flows in the load resistor R2, the rotary transformer 24 and the transistor TR3. The current value in this stage is set by the driving current of the transistor TR3 dependent on the value of the variable resistor Vr2 connected to the semiconductor switch 32 which is selectively switched in synchronism with the switching signal Ss. On the contrary, when the switching signal Ss shown in Figure 2C is at its low level, the transistor TR1 is turned on while the transistor TR2 is turned off. In this case, a current flows in the load resistor R1, the rotary transformer 24 and the transistor TR3. The current value in this stage is set by the base driving current of the transistor TR3 dependent on the value of the variable resistor Vr1 connected to the switch 32, which is selectively switched in synchronism with the switching signal Ss. The value of the variable resistor Vr2 is so preset that when the switching signal Ss is at its high level, the current flowing in the transistor TR3 is increased to be greater than the current obtained at the low level of the switching signal Ss. Therefore the amplified recording signal Sm from the recording amplifier 22 is shaped into the desired waveform of Figure 2E where the current of the digital servo pilot signal Se is made greater than that of the digital recording signal Sd.

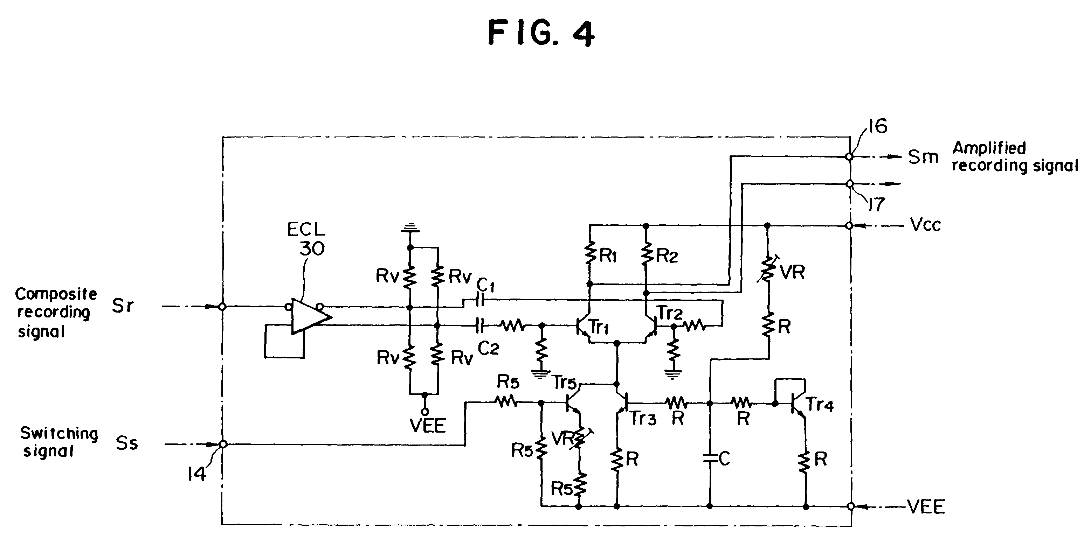

Referring now to Figure 4, the second example of the recording amplifier 22 will be described. Compared with the first example, the second example is so arrayed that a transistor TR3, a group of resistors R5, a variable resistor VR connected in series to the emitter, and a transistor TR5 connected to the transistor TR3 form an amplifier, and the switching signal Ss is supplied thereto to be amplified. In the high-level duration of the amplified switching signal Ss or when the amplified digital recording signal Sm is at a high level, the transistor TR2 is turned on while the transistor TR1 is turned off. In this case, the value of the current flowing in the load resistor R2, the rotary transformer 24 and the transistor TR3 is increased to be greater than the value in the above first example. The maximum value of such current is set by the value of the variable resistor VR connected in series to the emitter. Meanwhile in the low-level duration of the switching signal Ss, the operation performed is inverse to that in the aforementioned high-level duration. Other operations are exactly the same as in the first example, so further explanation is omitted.

The input digital recording signal Sd and the input digital servo pilot signal Se are thus processed to become a composite recording signal Sr, and thereafter the digital recording signal Sd and the digital servo pilot signal Se forming such composite recording signal Sr are discriminatively amplified to desired current levels to produce an amplified recording signal Sm where the current of the digital servo pilot signal Se is greater than that of the digital recording signal Sd, and then the amplified recording signal Sm is supplied to the rotary transformer 24. Subsequently the digital servo pilot signal Se alone having the desired greater current is magnetically recorded on the magnetic tape Tp by means of the magnetic head 26.

In this case, the signal processing by the digital multiplexer 20 is executed in a digital form thereby to attain satisfactory stability in the composite recording signal Sr. Furthermore, it is also possible easily to obtain the amplified recording signal Sm where the digital servo pilot signal Se has the desired greater current. The circuit configuration is relatively simple, and the control action can be performed with facility consequently to enhance the reliability.

## Claims

1. A digital signal recording apparatus comprising:
variable gain amplifier means (22) for selectively amplifying a time multiplexed composite signal (Sr) comprising a digital information signal portion and a pilot signal portion such that, in an output signal of the variable gain amplifier means (22), the pilot signal portion has a higher level that the digital information signal portion; and
a recording head (26) for recording the output signal of the variable gain amplifier means (22) on a recording medium (Tp);
characterised in that:
a digital multiplexer (20) is responsive to a switching signal (Ss) to time multiplex together a digital information signal (Sd) and a pilot signal (Se), which is a digital pilot signal, to form the time multiplexed composite signal (Sr);
the variable gain amplifier means (22) is responsive to said switching signal (Ss) to carry out said selective amplification of the time multiplexed composite signal (Sr) produced by the digital multiplexer (20); and
the variable gain amplifier means (22) comprises:
an input circuit (30) operative to phase invert the time multiplexed composite signal (Sr) and to provide at a pair of output terminals an output signal suitable for amplification by a differential amplifier circuit;
first and second transistors (Tr1, Tr2) connected together to form said differential amplifier circuit, each of said transistors having a base connected to a respective one of said pair of output terminals of said input circuit (30) and a collector connected to a supply voltage by means of a respective resistor (R1, R2), and emitters of said transistors being connected together;
a pair of output terminals (16, 17) at which said output signal of the variable gain amplifier means (22) is produced, each of said output terminals (16, 17) being connected to the collector of a respective one of the transistors (Tr1, Tr2); and
a control circuit (32, Tr3, Tr4; Tr5, Tr3, Tr4) connected to the common connected emitters of said transistors (Tr1, Tr2) and responsive to said switching signal (Ss) to control the sum of the currents flowing through the emitters of said first and second transistors (Tr1, Tr2) such that it is higher when said switching signal (Ss) is of a level indicating that the time multiplexed composite signal (Sr) currently comprises the digital pilot signal portion than when said switching signal (Ss) is of a level indicating that the time multiplexed composite signal (Sr) currently comprises the digital information signal portion.

2. Apparatus according to claim 1, wherein said control circuit (32, Tr3, Tr4) comprises a third transistor (Tr3) connected to the common connected emitters of said transistors (Tr1, Tr2), and a switch (32) responsive to said switching signal (Ss) to control a driving current to a base of the third transistor (Tr3) to have a value determined by the level of said switching signal (Ss).

3. Apparatus according to claim 1, wherein said control circuit (Tr5, Tr3, Tr4) comprises a third transistor (Tr3) connected to the common connected emitters of said transistors (Tr1, Tr2) and forming part of an amplifier (Tr5, Tr3) connected to receive said switching signal (Ss).

4. Apparatus according to claim 2 or claim 3, wherein said third transistor (Tr3) forms part of a current mirror circuit (Tr3, Tr4) for equalizing the emitter current of the differential amplifier (Tr1, Tr2).

5. Apparatus according to any one of the preceding claims, including means for quantizing and digitizing an analogue video signal which is in a frequency band of 20 to 30 MHz to produce said digital information signal (Sd), and means for quantizing and digitizing an analogue pilot signal which is in a frequency band of several MHz to produce said digital pilot signal (Se).

## Patentansprüche

1. Aufzeichnungsgerät für digitale Signale mit:
einer einstellbaren Vorverstärkungseinrichtung (22) zur selektiven Verstärkung eines zusammengesetzten Zeitmultiplexsignals (Sr), welches einen digitalen Informationssignalanteil und einen Pilotsignalanteil in der Weise enthält, daß in einem Ausgangssignal der einstellbaren Vorverstärkungseinrichtung (22) der Pilotsignalanteil einen höheren Pegel als der digitale Informationssignalanteil besitzt; und
einem Aufzeichnungskopf (26) zur Aufzeichnung des Ausgangssignals der einstellbaren Vorverstärkungseinrichtung (22) auf ein Aufzeichnungsmedium (Tp);
dadurch gekennzeichnet,
daß ein digitaler Multiplexer (20) auf ein Umschaltesignal (Ss) anspricht, um ein digitales Informationssignal (Sd) und ein Pilotsignal (Se), welches ein digitales Pilotsignal ist, zusammen einem Zeitmultiplexverfahren zu unterwerfen, um ein zusammengesetztes Zeitmultiplexsignal (Sr) zu bilden;
daß die einstellbare Vorverstärkungseinrichtung (22) auf das Umschaltesignal (Ss) anspricht, um die selektive Verstärkung des durch den digitalen Multiplexers (20) erzeugten zusammengesetzten Zeitmultiplexsignals (Sr) durchzuführen; und
wobei die einstellbare Vorverstärkungseinrichtung (22) umfaßt:
eine Eingangsschaltung (30), welche eine Phasenumkehrung des zusammengesetzten Zeitmultiplexsignals (Sr) bewirkt und an einem Ausgangsanschlußpaar ein Ausgangssignal bereitstellt, welches für eine Verstärkung durch eine Differenzverstärkerschaltung geeignet ist;
erste und zweite Transistoren (Tr1, Tr2), welche miteinander verbunden sind, um die Differenzverstärkerschaltung zu bilden, wobei jeder der Transistoren eine Basis, die mit jeweils einem der Ausgangsanschlüsse des Ausgangsanschlußpaares der Eingangsschaltung (30) verbunden sind, und einen Kollektor, welcher mittels eines jeweiligen Widerstandes (R1, R2) mit einer Versorgungsspannnung verbunden ist, besitzt, und wobei die Emitter der Transistoren miteinander verbunden sind;
ein Ausgangsanschlußpaar (16, 17), an welchen das Ausgangssignal der einstellbaren Vorverstärkungseinrichtung (22) erzeugt wird, wobei jeweils jeder der Ausgangsanschlüsse (16, 17) mit dem Kollektor von einem der Transistoren (Tr1, Tr2) verbunden ist; und
eine Steuerschaltung (32, Tr3, Tr4; Tr5, Tr3, Tr4), welche mit den gemeinsam verbundenen Emittern der Transistoren (Tr1, Tr2) verbunden ist und auf das Umschaltesignal (Ss) anspricht, um die Summe der durch die Emitter des ersten und zweiten Transistors (Tr1, Tr2) fließenden Ströme derart zu steuern, daß sie größer ist, wenn das Umschaltesignal (Ss) einen Pegel besitzt, welcher anzeigt, daß das zusammengesetzte Zeitmultiplexsignal (Sr) zur Zeit den digitalen Pilotsignalanteil umfaßt, als wenn das Umschaltesignal (Ss) einen Pegel besitzt, welcher anzeigt, daß das zusammengesetzte Zeitmultiplexsignal (Sr) zur Zeit den digitalen Informationssignalanteil umfaßt.

2. Gerät nach Anspruch 1, bei welchem die Steuerschaltung (32, Tr3, Tr4) einen dritten Transistor (Tr3), welcher mit den gemeinsam verbundenen Emittern der Transistoren (Tr1, Tr2) verbunden ist, und einen Schalter (32) enthält, welcher auf das Umschaltesignal (Ss) anspricht, um einen Steuerstrom für die Basis des dritten Transistors (Tr3) zu steuern, damit dieser einen Wert, der durch den Pegel des Umschaltesignals (Ss) bestimmt wird, einnimmt.

3. Gerät nach Anspruch 1, bei welchem die Steuerschaltung (Tr5, Tr3, Tr4) einen dritten Transistor (Tr3) enthält, welcher mit den gemeinsam verbundenen Emittern der Transistoren (Tr1, Tr2) verbunden ist und einen Teil eines angeschlossenen Verstärkers (Tr5, Tr3) bildet, um das Umschaltesignal (Ss) zu empfangen.

4. Gerät nach Anspruch 2 oder 3, bei welchem der dritte Transistor (Tr3) einen Teil einer Stromspiegelschaltung (Tr3, Tr4) zur Entzerrung des Emitterstroms des Differenzverstärkers (Tr1, Tr2) bildet.

5. Gerät nach einem der vorhergehenden Ansprüche, welches Mittel zur Quantisierung und Digitalisierung eines analogen Videosignals, welches in einem Frequenzband von 20 bis 30 MHz liegt, um das digitale Informationssignal (Sd) zu erzeugen, und Mittel zur Quantisierung und Digitalisierung eines analogen Videosignals, welches in einem Frequenzband von von mehreren MHz liegt, um das digitale Pilotsignal (Se) zu erzeugen, enthält.

## Revendications

1. Appareil d'enregistrement de signal numérique comprenant :
un dispositif amplificateur à gain variable (22) pour amplifier sélectivement un signal composite multiplexé dans le temps (Sr) comprenant une partie de signal numérique d'informations et une partie de signal pilote pour que, dans un signal de sortie du dispositif amplificateur à gain variable (22), la partie de signal pilote ait un niveau plus élevé que la partie de signal numérique d'informations ; et
une tête d'enregistrement (26) pour enregistrer le signal de sortie du dispositif amplificateur à gain variable (22) sur le support d'enregistrement (Tp) ;
caractérisé en ce que :
un multiplexeur numérique (20) est sensible à un signal de commutation (Ss) pour multiplexer dans le temps ensemble un signal numérique d'informations (Sd) et un signal pilote (Se), qui est un signal pilote numérique, pour former le signal composite multiplexé dans le temps (Sr) ;
le dispositif amplificateur à gain variable (22) est sensible audit signal de commutation (Ss) pour réaliser ladite amplification sélective du signal composite multiplexé dans le temps (Sr) produit par le multiplexeur numérique (20) ; et
le dispositif amplificateur à gain variable (22) comprend :
un circuit d'entrée (30) fonctionnel pour inverser la phase du signal composite multiplexé dans le temps (Sr) et pour fournir à une paire de bornes de sortie un signal de sortie approprié pour une amplification par un circuit amplificateur différentiel ;
des premier et second transistors (Tr1, Tr2) raccordés ensemble pour former ledit circuit amplificateur différentiel, chacun desdits transistors ayant une base raccordée à une borne respective de ladite paire de bornes de sortie dudit circuit d'entrée (30) et un collecteur raccordé à une tension d'alimentation au moyen d'une résistance respective (R1, R2), et des émetteurs desdits transistors étant raccordés ensemble ;
une paire de bornes de sortie (16, 17) sur lesquelles ledit signal de sortie dudit dispositif amplificateur à gain variable (22) est produit, chacune desdites bornes de sortie (16, 17) étant raccordée au collecteur des transistors respectifs (Tr1, Tr2) ; et
un circuit de commande (32, Tr3, Tr4 ; Tr5, Tr3, Tr4) raccordé aux émetteurs raccordés en commun desdits transistors (Tr1, Tr2) et sensibles audit signal de commutation (Ss) pour commander la somme des courants traversant les émetteurs desdits premier et second transistors (Tr1, Tr2) pour qu'elle soit plus élevée lorsque le signal de commutation (Ss) est d'un niveau indiquant que le signal composite multiplexé dans le temps (Sr) comprend actuellement la partie de signal pilote numérique que lorsque ledit signal de commutation (Ss) est d'un niveau indiquant que le signal composite multiplexé dans le temps (Sr) comprend actuellement la partie de signal numérique d'informations.

2. Appareil selon la revendication 1, dans lequel ledit circuit de commande (32, Tr3, Tr4) comprend un troisième transistor (Tr3) raccordé aux émetteurs raccordés en commun desdits transistors (Tr1, Tr2), et un commutateur (32) sensible audit signal de commutation (Ss) pour commander un courant de commande sur une base dudit troisième transistor (Tr3) pour avoir une valeur déterminée par le niveau dudit signal de commutation (Ss).

3. Appareil selon la revendication 1, dans lequel ledit circuit de commande (Tr5, Tr3, Tr4) comprend un troisième transistor (Tr3) raccordé aux émetteurs raccordés en commun desdits transistors (Tr1, Tr2) et formant une partie d'un amplificateur (Tr5, Tr3) raccordé pour recevoir ledit signal de commutation (Ss).

4. Appareil selon la revendication 2 ou 3, dans lequel ledit troisième transistor (Tr3) forme une partie d'un circuit miroir de courant (Tr3, Tr4) pour égaliser le courant d'émetteur de l'amplificateur différentiel (Tr1, Tr2).

5. Appareil selon l'une quelconque des revendications précédentes, comprenant un dispositif pour quantifier et numériser un signal vidéo analogique qui est dans une bande de fréquence de 20 à 30 MHz pour produire ledit signal numérique d'informations (Sd), et un dispositif pour quantifier et numériser un signal pilote analogique qui est dans une bande de fréquence de plusieurs MHz pour produire ledit signal pilote numérique (Se).
